# EUROPÄISCHE PATENTSCHRIFT

(11) **EP 0 755 026 B1**
(45) Veröffentlichungstag und Bekanntmachung des Hinweises auf die Patenterteilung: **05.02.2003**
(21) Anmeldenummer: 96107338.4
(22) Anmeldetag: 09.05.1996
(51) Int. Cl.: G07C 9/00, G06K 7/10

(54) **Verfahren zur automatischen Identifikation einer unbekannten Anzahl von Transpondern durch einen Leser sowie Identifikationssystem zur Durchführung des Verfahrens**
Method for automatically identifying an unknown number of transponders by a reader and identification system for performing the method
Procédé d'identification automatique d'un nombre inconnu de transpondeurs par un lecteur et dispositif d'identification pour la mise en oeuvre de ce procédé

(30) Priorität: 19.07.1995 DE 19526353
(43) Veröffentlichungstag der Anmeldung: 22.01.1997
(73) Patentinhaber: Stobbe, Anatoli, 30890 Barsinghausen (DE)
(72) Erfinder: Merk, Holger, 30890 Barsinghausen (DE); Stobbe, Anatoli, 30890 Barsinghausen (DE)
(74) Vertreter: Patentanwälte Thömen & Körner

(56) Entgegenhaltungen:
- EP-A- 0 427 342
- EP-A- 0 467 036
- EP-A- 0 494 114
- EP-A- 0 495 708
- WO-A-94/27253
- US-A- 5 430 441

## Beschreibung

Die Erfindung betrifft ein Verfahren zur automatischen Identifikation einer unbekannten Anzahl von Transpondern durch einen Leser, und außerdem befaßt sich die Erfindung mit einem Identifikationssystem mit einem Leser und mehreren Transpondern zur Durchführung des Verfahrens.

Identifikationstechniken und entsprechende Verfahren werden immer häufiger in den unterschiedlichsten Anwendungsbereichen für Personen, Tiere oder Waren und andere Gegenstände verwendet. Beispielsweise werden derartige Identifikationsverfahren eingesetzt, um nur bestimmten autorisierten Personen den Zugang zu geschützten Räumen oder auch zu einem Gebäude zu ermöglichen. Zu diesem Zweck müssen die autorisierten Personen zunächst identifiziert werden, um den Zugang für andere nicht berechtigte Personen auszuschließen.

Bei den bekannten Identifikationsverfahren ist im allgemeinen in der Nähe der betreffenden Eingangstür für die Räume oder für ein Gebäude ein Leser installiert, der über eine Antenne ein elektromagnetisches HF-Feld aussendet. Die berechtigte Person trägt einen kleinen Transponder bei sich, in welchem spezielle Transponderdaten gespeichert sind. Wenn der Transponder in den Wirkungsbereich des vom Leser abgestrahlten HF-Feldes gelangt, beginnt der Transponder automatisch damit, seine Transponderdaten auszusenden, die vom Leser empfangen und ausgewertet werden.

Im allgemeinen wird der Transponder dabei über das HF-Feld des Lesers mit Energie versorgt. Daneben ist es aber auch möglich, den Transponder selbst mit einer kleinen Batterie als Energiequelle zu versehen.

Die vom Leser empfangenen Transponderdaten werden meistens von einem gesonderten zentralen Rechner ausgewertet. Wenn die Auswertung der Transponderdaten ergibt, daß diese Transponderdaten in Ordnung sind und als Berechtigung für den Zugang angesehen werden, veranlaßt der zentrale Rechner beispielsweise ein automatisches Öffnen der Tür, durch welche die berechtigte Person eintreten kann.

Derartige Identifikationsverfahren werden unter anderem auch für Waren oder andere Gegenstände eingesetzt, die jeweils mit einem entsprechenden Transponder versehen werden. Dabei erhält jede Ware bzw. jede Warengruppe einen Transponder mit dieser Ware bzw. dieser Warengruppe zugeordneten Transponderdaten. Beim Eintritt der Ware und damit beim Eintritt des Transponders in das HF-Feld des Lesers besteht somit die Möglichkeit, die betreffende Ware entsprechend den Transponderdaten zu identifizieren. Derartige Identifikationssysteme sind von besonderer Bedeutung bei der automatischen Handhabung von Waren und auch bei der Logistik bei Fertigungsprozessen, wenn bestimmte Gegenstände identifiziert werden müssen, die innerhalb eines Verarbeitungsprozesses an unterschiedlichen Orten benötigt werden.

Die voranstehend erwähnten Beispiele stellen nur einen kleinen Teil der in der täglichen Praxis auftretenden Anwendungsfälle von Identifikationsverfahren dar, deren Bedeutung in der letzten Zeit rapide angestiegen ist. Ein entsprechendes Identifikationssystem bzw. der hierfür benötigte Leser und Transponder ist unter anderem durch das deutsche Patent DE 40 03 410 C2 bekannt.

Der an sich vorteilhaften Anwendung des bekannten Identifikationsverfahrens steht in der Praxis allerdings häufig ein gravierender Nachteil entgegen. Die Arbeitsweise des Lesers und des Transponders ist nämlich nur dann gewährleistet, wenn sich nur ein einziger Transponder allein im Wirkungsbereich des HF-Feldes des Lesers befindet. Wenn mehrere Transponder zur gleichen Zeit in den Wirkungsbereich des HF-Feldes gelangen, kann der Leser eine sichere Auswertung der gleichzeitig empfangenen Transponderdaten nicht vornehmen. In der täglichen Anwendung von Identifikationsverfahren tritt aber immer häufiger gerade der Fall auf, daß sich mehrere Transponder im Wirkungsbereich des HF-Feldes des Lesers befinden, beispielsweise dann, wenn mehrere mit jeweils einem Transponder versehene Personen in die Nähe einer Eingangstür gelangen.

Um auch in diesen Fällen eine sichere Arbeitsweise des Identifikationssystems gewährleisten zu können, ist in dem US-Patent 5 124 699 eine Lösung beschrieben, bei der die Transponder vereinzelt werden, wenn sich eine unbekannte Anzahl von Transpondern gleichzeitig im HF-Feld des Lesers befindet, so daß nacheinander jeder Transponder für sich alleine identifiziert werden kann. Dabei ist vorgesehen, zunächst nur einen einzigen Transponder auszuwählen und die anderen Transponder zeitweise daran zu hindern, daß sie ihre Transponderdaten aussenden. Nachdem der ausgewählte Transponder anhand seiner Transponderdaten durch den Leser identifiziert worden ist, wird dieser Transponder blockiert und die verbleibenden anderen Transponder werden wieder eingeschaltet. Diese Schritte werden nach und nach wiederholt, bis alle Transponder abgearbeitet sind. Auf diese Weise werden somit die zu gleicher Zeit im HF-Feld des Lesers befindlichen Transponder vereinzelt und nacheinander identifiziert.

Bei dem bekannten Verfahren gemäß dem US-Patent 5 124 699 wird die Vereinzelung der einzelnen Transponder dadurch vorgenommen, daß von dem Leser die Frequenz des HF-Feldes periodisch innerhalb einer vorgegebenen Anzahl von bestimmten Frequenzwerten geändert wird. Jeder Transponder ist derart aufgebaut, daß er diese unterschiedlichen Frequenzen und die Frequenzwechsel erkennen kann und daß entsprechend der jeweiligen Frequenz ein zugeordneter Transponder zeitweilig abgeschaltet wird, bis nur noch ein einziger Transponder übrig bleibt, der nicht abgeschaltet wird, und der seine Transponderdaten an den Leser senden kann.

Aus der gattungsbildenden EP 0 467 036 A2 ist ein Verfahren und eine Vorrichtung zur Identifizierung und Verfolgung von mehreren Transpondern mittels eines Lesers bekannt. Zur erstmaligen Identifizierung werden die Transponder aktiviert und anschließend aufgefordert, ihre Transponderdaten zu senden. Durch Zufallszeiten gesteuert beginnen die Transponder mit ihren Sendungen zu unterschiedlichen Zeiten. Innerhalb eines vorgegebenen Zeitfensters kann der Leser mehrere Transponder identifizieren, sofern die Sendungen einzeln eintreffen. Nach Ablauf des Zeitfensters sendet der Leser Bestätigungen über die identifizierten Transponder. Diese nehmen dann einen Ruhezustand ein. Anschließend erfolgt eine neue Aufforderung, Transponderdaten zu senden und dieser Ablauf wiederholt sich, bis alle Transponder identifiziert sind. In einem zweiten oder weiteren Zyklus können dann Transponder antworten, die im vorangegangenen Zyklus keine Bestätigung vom Leser erhalten haben, da ihre Aussendungen nicht einwandfrei empfangen wurden, z. B. bei gleichzeitiger Sendung weiterer Transponder.

Bei einem aus der EP 0 494 114 A2 bekannten Identifikationssystem sendet ein Leser zur erstmaligen Identifizierung von Transpondern ein Abfragesignal, worauf die Transponder zu zufallsgesteuerten Zeiten wiederholt Transponderdaten als Antwort aussenden. Wird einer der Transponder identifiziert, wechselt der Zustand des Abfragesignals kurzzeitig unmittelbar nach Ende der Aussendung des identifizierten Transponders, was dieser als Bestätigung registriert und anschließend in einen Ruhezustand übergeht. Transponder, die am Ende ihrer Aussendung keine Zustandsänderung des Abfragesignals empfangen haben, melden sich erneut.

Aus der WO 94 27253 A1 ist bekannt, bei einem Verfahren zur Organisation der Übertragung von Daten von mehreren Sendern über einen Kanal zu einem Empfänger ein Belegungssignal zu erzeugen, sobald der Kanal durch einen oder mehrere Sender belegt ist. Das Belegungssignal unterscheidet nicht, ob eine auswertbare Übertragung eines einzelnen Senders oder eine Kollision mehrerer Sender vorliegt.

Der Erfindung liegt die Aufgabe zugrunde, ein Verfahren zur automatischen Identifikation einer unbekannten Anzahl von Transpondern durch einen Leser zu schaffen, welches sich wesentlich einfacher durchführen und realisieren lässt, und welches eine sichere Vereinzelung einer Mehrzahl von Transpondern ermöglicht, so dass die Transponderdaten einzeln nacheinander vom Leser erfasst und ausgewertet werden können. Außerdem soll durch die Erfindung ein Identifikationssystem zur Durchführung des Verfahrens geschaffen werden.

Zur Lösung dieser Aufgabe sieht die Erfindung im Hinblick auf das Verfahren die im Patentanspruch 1 angegebenen Merkmale vor, und hinsichtlich des Identifikationssystems wird die Aufgabe durch den Patentanspruch 10 gelöst.

Die Erfindung geht von der an sich bekannten Erkenntnis aus, dass es erforderlich ist, die im elektromagnetischen Feld des Lesers befindlichen Transponder so zu beeinflussen, dass die Transponderdaten nicht alle gleichzeitig, sondern einzeln zeitlich nacheinander vom Leser erfasst werden können. In einem ersten Schritt werden zu diesem Zweck die im Wirkungsbereich des elektromagnetischen HF-Feldes befindlichen und durch das HF-Feld aktivierten Transponder durch ein vom Leser gesendetes Kollisionssignal in einen Totzustand versetzt. Dieser Totzustand hat die Wirkung, dass die Transponder keine Transponderdaten mehr aussenden, obwohl sie sich im HF-Feld des Lesers befinden.

Der Empfang des Kollisionssignals veranlasst jeden Transponder dazu, eine zufällige Totzeit zu erzeugen. Während der Dauer dieser Totzeit senden die Transponder keine Transponderdaten aus. Erst am Ende ihrer jeweiligen Totzeiten beginnen die Transponder erneut damit, die Transponderdaten auszusenden.

Da die Totzeiten der einzelnen Transponder nach einem Zufallsprinzip erzeugt werden, kann man davon ausgehen, dass diese Totzeiten voneinander abweichen und nicht etwa identisch sind. Das bedeutet, dass nach Ablauf der kürzesten Totzeit der entsprechende Transponder als erster damit beginnt, seine Transponderdaten auszusenden, während die anderen Transponder sich noch in ihrem Totzustand befinden. Der Leser empfängt daher - zumindest solange, bis der Transponder mit der zweitkürzesten Totzeit zu senden beginnt - ausschließlich Transponderdaten des betreffenden ersten Transponders. Sobald der Leser erkannt hat, dass er die Transponderdaten wenigstens eines Transponders empfängt, sendet er ein Belegungssignal aus. Durch dieses Belegungssignal werden die übrigen Transponder in einen Ruhezustand versetzt, so dass sie auch nach Ablauf ihrer jeweiligen Totzeiten keine Transponderdaten aussenden.

Die soweit beschreibenen erfindungsgemäßen Verfahrensschritte lassen sich auf das Prinzip des Mürfelns zurückführen. Indem jeder Transponder für sich eine zufällige Totzeit erzeugt, lässt sich der entsprechende Vorgang so beschreiben, dass die beteiligten Transponder unter sich auswürfeln, welcher als erster alleine sendet, während alle anderen Transponder warten.

Wenn der Leser die Transponderdaten des ersten Transponders mit der kürzesten Totzeit vollständig empfangen hat, sendet der Leser ein Quittungssignal, durch welches der zuvor identifizierte Transponder.in einen Passivzustand versetzt wird, in welchem er keine Transponderdaten für eine erste Identifikation mehr sendet. Unter Bezugnahme auf den angesprochenen Vergleich mit einem Würfelspiel kann man also sagen, dass der identifizierte Transponder wenigstens während einer ersten Identifikationsphase aus dem Spiel ausgeschieden ist.

Als nächstes werden die noch im Ruhezustand befindlichen und übrig gebliebenen Transponder wieder aktiviert, und es wiederholen sich die voranstehend beschriebenen einzelnen Verfahrensschritte, und zwar solange, bis alle Transponder nacheinander vom Leser einzeln identifiziert worden sind. Zunächst beginnen also alle Transponder wieder damit, ihre Transponderdaten auszusenden, und der Leser sendet seinerseits das Kollisionssignal aus, um die Transponder in ihren Totzustand zu versetzen. Danach erzeugt jeder Transponder für sich eine zufällige neue Totzeit, d. h., die restlichen Transponder beginnen wieder damit, unter sich auszuwürfeln, wer als nächstes an der Reihe ist, alleine seine Transponderdaten zum Leser zu übertragen usw.. Bei der Erfindung wird der identifizierte Transponder durch das Quittungssignal des Lesers in einen Passivzustand versetzt, und die noch im Ruhezustand befindlichen anderen Transponder zum Senden ihrer Transponderdaten veranlasst, d. h., diese Transponder werden durch das Quittungssignal aus ihrem Ruhezustand geholt und wieder aktiviert.

Die mathematische Wahrscheinlichkeit, dass die von den einzelnen Transpondern nach einem Zufallsprinzip erzeugten Totzeiten nicht unterschiedlich sind, sondern dass zwei übereinstimmende Totzeiten erzeugt werden, ist gering. Für diesen sehr unwahrscheinliche Fall sieht eine Weiterbildung folgendes vor. Der Leser wird nämlich erkennen, dass er nicht ein einzelnes Transpondersignal, sondern mehrere Transpondersignale bzw. Transponderdaten empfängt, und der Leser wird dann das schon erwähnte Kollisionssignal aussenden, so dass die erfindungsgemäßen Verfahrensschritte von Anfang an wiederholt werden, bis der gewünschte Fall eintritt, dass wegen der unterschiedlichen Totzeiten auch tatsächlich nur ein einzelner Transponder als erster damit beginnt, seine Transponderdaten auszusenden.

Gemäß einer zweckmäßigen Ausgestaltung der Erfindung wird die Totzeit jedes Transponders durch eine Zahl definiert, welche von einem Zufallsgenerator erzeugt wird, und in vorteilhafter Weise können auch noch die beispielsweise in Form einer Zahl vorliegenden Identifizierungsdaten (I-dentifizierungsnummer) des jeweiligen Transponders zur Erzeugung der Totzeit herangezogen werden. Die Wahrscheinlichkeit, dass sich dabei keine voneinander abweichende Totzeiten ergeben, wird dadurch noch wesentlich erhöht.

Gemäß einer anderen zweckmäßigen Ausgestaltung der Erfindung ist es auch möglich, dass die noch im Ruhezustand befindlichen Transponder durch das Quittungssignal dazu veranlasst werden, erneut eine zufällige Totzeit zu erzeugen, an deren Ende sie damit beginnen, ihre Transponderdaten auszusenden. Bei dieser Ausgestaltung der Erfindung kann also das an sich zu Anfang vorgesehene Kollisionssignal des Lesers entfallen, nachdem erst einmal ein erster Transponder identifiziert worden ist.

Wenn alle im HF-Feld des Lesers befindlichen Transponder einzeln nacheinander identifiziert worden sind, wird dies vom Leser registriert, weil er keine Transponderdaten mehr empfängt. Der Leser kann dann wieder in seine normale Betriebsart geschaltet werden, d. h., er strahlt eine Sendeaufforderung derart ab, daß neue Transponder, die in das HF-Feld des Lesers gelangen, ihre Transponderdaten aussenden.

Gemäß einer zweckmäßigen Ausgestaltung der Erfindung ist es aber auch möglich, daß sich der Leser nach der Identifikation aller Transponder in einen wählbaren Wartezustand schaltet und praktisch eine Ruhepause einlegt. Dies ist dann von Vorteil, wenn die Transponder eine eigene Energieversorgung in Form einer kleinen Batterie besitzen, welche dann geschont werden kann, weil die Transponder in dieser Zeit nicht mit der Auswertung irgendwelcher vom Leser gesendeten Signale beschäftigt sind und somit auch keine Energie für irgendwelche Reaktionen auf die empfangenen Lesersignale benötigen.

Es gibt jedoch eine Vielzahl von Transpondern, die für ihren Betrieb keine eigene Batterie als Energiequelle benötigen, weil sie ihre Energie aus dem HF-Feld des Lesers selbst beziehen. In solchen Fällen besteht dann nicht die Notwendigkeit, daß sich der Leser in den Wartezustand schaltet.

Wenn neben einer ersten Identifikation der Transponder auch eine Überwachung der Anwesenheit im Wirkungsbereich des elektrischen Feldes des Lesers gewünscht ist, kann der Leser im Wartezustand ein kontinuierliches oder durch Pausen unterbrochenes elektromagnetisches Feld erzeugen, das von allen identifizierten Transpondern überwacht wird. Der oder die Transponder, welche das zu überwachende Feld nicht registrieren, senden dann Transponderdaten zur Signalisierung ihrer Abwesenheit und diese Transponderdaten werden vom Leser ausgewertet. Voraussetzung ist hier, daß die Sendereichweite der Transponder größer als der Wirkungsbereich des elektrischen Feldes des Lesers ist und die Transponder eine eigene Energiequelle haben.

Da die Transponder im Normalfall nur auf Empfang sind und nur bei Abwesenheit senden, ist ihr durchschnittlicher Energieverbrauch gering. Bei einem batteriebetriebenen mobilen Leser wird die Variante bevorzugt, in der dieser ein durch Pausen unterbrochenes elektromagnetisches Feld erzeugt.

Alternativ kann auch vorgesehen sein, daß die Transponder im Passivzustand wiederholt Transponderdaten zur Signalisierung ihrer Anwesenheit senden und diese Transponderdaten vom Leser ausgewertet werden.

Diese Lösung ist für batteriebetriebene mobile Leser sehr energiesparend, da der Leser im Wartezustand nicht senden muß, dafür werden aber die Transponder belastet. Allerdings kommen sie mit geringeren Sendeleistungen aus, da geringere Entfernungen zum Leser überbrückt werden müssen.

Bei dem erfindungsgemäßen Identifikationssystem zur Durchführung des Verfahrens ist vorgesehen, daß der Leser eine Kollisionserkennungsschaltung besitzt. Durch diese Schaltung wird der Leser in die Lage versetzt, den gleichzeitigen Empfang mehrerer Transponderdaten zu erkennen, und der Leser kann daraufhin das Kollisionssignal aussenden. Die Transponder besitzen ihrerseits eine Steuerschaltung zur Erkennung und Auswertung des Kollisionssignals.

In einer zweckmäßigen Ausgestaltung des erfindungsgemäßen Identifikationssystems besitzt jeder Transponder einen Zufallsgenerator zur Erzeugung einer Zufallszahl sowie einer Verzögerungsschaltung, um eine der Zufallszahl entsprechende Totzeit erzeugen zu können.

Anhand der Zeichnung wird die Erfindung nachfolgend unter Bezugnahme auf ein Ausführungsbeispiel näher erläutert.

Es zeigen:
- Fig. 1: einen Leser und vier Transponder im HF-Feld des Lesers,
- Fig. 2: ein schematisches Blockschaltbild eines Lesers,
- Fig. 3: ein schematisches Blockschaltbild eines Transponders, und
- Fig. 4: eine schematische graphische Darstellung von Transponderdaten und Lesersignalen.

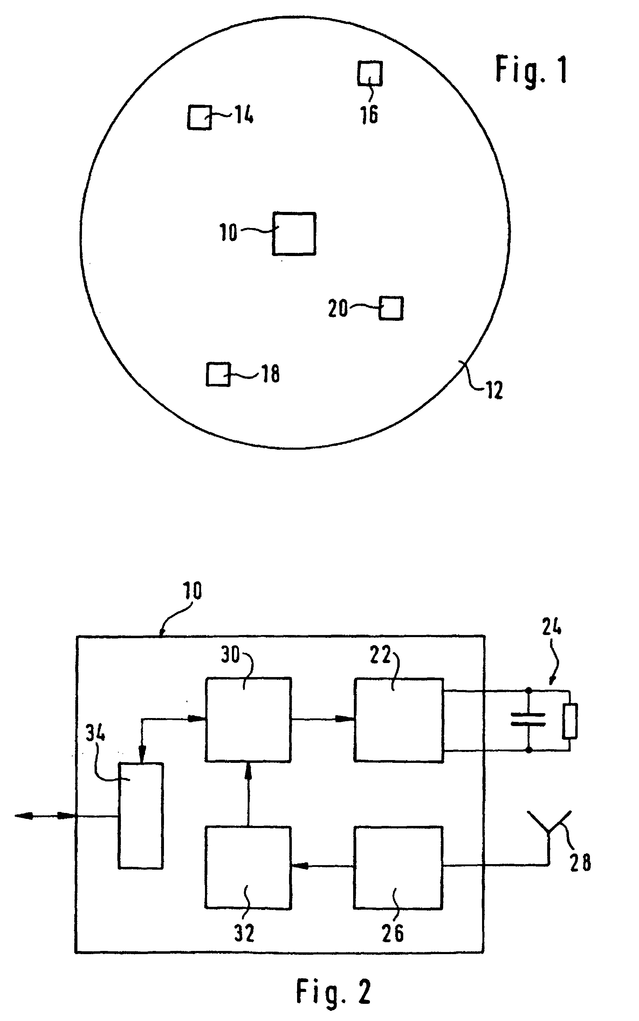

In Fig. 1 ist ein Leser 10 dargestellt, der ein durch einen Kreis symbolisiertes elektromagnetisches HF-Feld 12 aussendet. Dabei soll der Kreis den wirksamen Bereich des HF-Feldes 12 verdeutlichen. Über das HF-Feld 12 strahlt der Leser 10 in an sich bekannter Weise eine Sendeaufforderung ab. Dadurch werden die im Wirkungsbereich des HF-Feldes 12 gelangenden Transponder 14, 16, 18 und 20 veranlaßt, ihre Transponderdaten auszusenden. Die Transponderdaten können dabei Identifikationsdaten des Transponders selbst sowie applikationsspezifische Kenndaten umfassen. Diese Kenndaten lassen sich bestimmten Personen oder Gegenständen zuordnen.

Fig. 2 zeigt als schematisches Blockschaltbild den Aufbau eines Lesers 10, der einen Sender 22, einen Schwingkreis 24 sowie einen Empfänger 26 mit einer Antenne 28 umfaßt. Ferner besitzt der Leser 10 einen Mikroprozessor 30 und als weiteren wesentlichen Bestandteil eine Kollisionserkennungsschaltung 32. Der Leser 10 kann mobil, d. h. batteriebetrieben, oder ortsfest, z. B. in der Nähe einer nicht näher dargestellten Eingangstür eines Gebäudes installiert sein und ist über eine Schnittstelle 34 mit einem zentralen Rechner verbunden, der die empfangenen Transponderdaten auswertet und daraufhin bestimmte Schritte einleitet (etwa das Öffnen einer Tür).

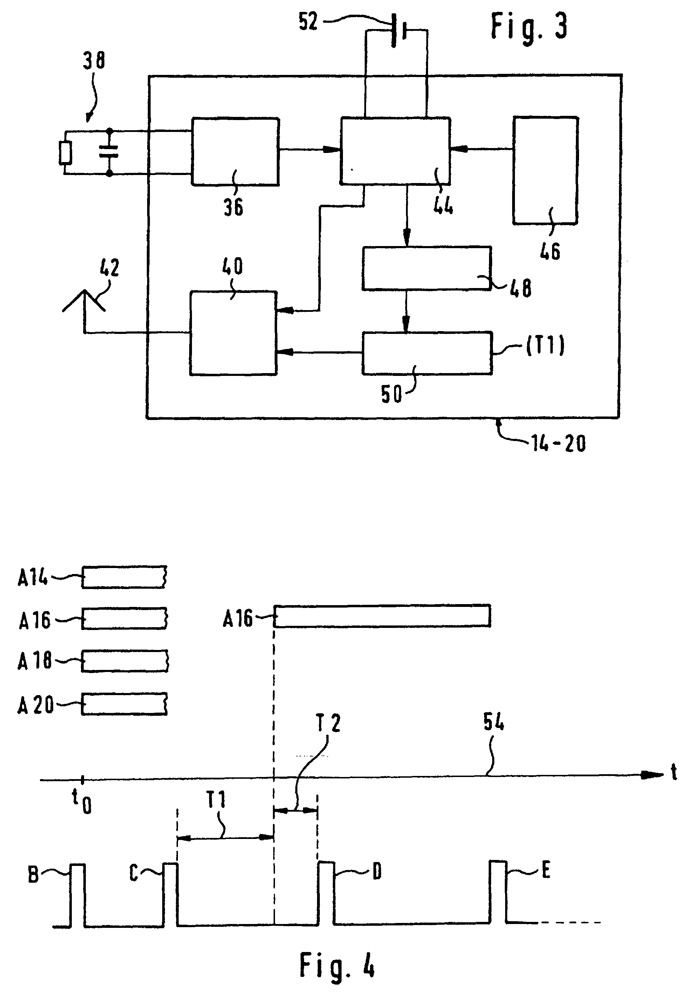

Das schematische Blockschaltbild in Fig. 3 zeigt den Aufbau eines Transponders mit einem Empfänger 36 mit einem Schwingkreis 38 sowie einen Sender 40 und einer Antenne 42. Weiterhin umfaßt der Transponder eine Steuerschaltung 44 und einen programmierbaren und löschbaren Speicher 46 (ein EEPROM). Dieser Speicher 46 stellt die eigentliche Datenbank für die Transponderdaten dar. Die Transponderdaten umfassen Identifikationsdaten des Transponders selbst sowie applikationsspezifische Kenndaten.

Weitere Bestandteile des Transponders sind ein Zufallsgenerator 48 zur Erzeugung einer Zufallszahl und eine nachgeschaltete Verzögerungsschaltung 50, die aufgrund der jeweiligen Zufallszahl eine Totzeit erzeugt. Gegebenenfalls kann der Transponder als Energiequelle noch eine Batterie 52 besitzen.

Anhand der in Fig. 4 dargestellten schematischen graphischen Darstellung wird die Funktionsweise des Verfahrens sowie des Lesers 10 und der Transponder 14 - 20 näher erläutert. Der Teil der Zeichnung in Fig. 4 oberhalb einer Zeitachse 54 betrifft Transponderdaten und der Teil der Zeichnung unterhalb der Zeitachse 54 zeigt Signale des Lesers 10.

Gemäß der Darstellung in Fig. 1 befinden sich vier Transponder 14, 16, 18 und 20 im HF-Feld 12 des Lesers 10. Die vier Transponder 14, 16, 18 und 20 beginnen deshalb zum Zeitpunkt t0 damit, aufgrund eines Sendeaufforderungssignals B des Lesers 10 die Transponderdaten A14, A16, A18 und A20 auszusenden. Dabei arbeiten alle Transponder 14, 16, 18 und 20 auf der gleichen Frequenz.

Die Kollisionserkennungsschaltung 32 des Lesers 10 erkennt nun, daß gleichzeitig Transponderdaten A14, A16, A18 und A20 von mehreren Transpondern 14, 16, 18 und 20 empfangen werden, und die Kollisionserkennungsschaltung 32 veranlaßt, daß der Leser ein Kollisionssignal C abstrahlt. Dieses Kollisionssignal C wird ausgesendet, bevor die Transponder 14, 16, 18 und 20 ihre Transponderdaten A14, A16, A18 und A20 vollständig übertragen haben.

Aufgrund des Empfanges des Kollisionssignals C werden die Transponder 14, 16, 18 und 20 über ihre Steuerschaltung 44 dazu veranlaßt, die Aussendung der Transponderdaten A14, A16, A18 und A20 abzubrechen und keinerlei Daten mehr auszusenden. Gleichzeitig werden über die Steuerschaltung 44 der Zufallsgenerator 48 und die Verzögerungsschaltung 50 aktiviert, so daß jeder einzelne Transponder 14, 16, 18 und 20 für sich eine Totzeit T erzeugt.

Die Transponder 14, 16, 18 und 20 sind so aufgebaut, daß sie erst am Ende ihrer jeweiligen Totzeit wieder damit beginnen, ihre Transponderdaten A14, A16, A18 und A20 auszusenden. In Fig. 4 ist der Fall angenommen, daß der Transponder 16 die kürzeste Totzeit T1 aufweist und somit nach Ablauf dieser Totzeit T1 seine Transponderdaten A16 an den Leser 10 sendet. Nach einer gewissen kurzen Erkennungszeit T2 hat der Leser 10 festgestellt, daß nur Transponderdaten A16 eines einzigen Transponders 16 empfangen werden, und der Leser 10 sendet nunmehr seinerseits ein Belegungssignal D aus.

Durch das Belegungssignal D werden die anderen Transponder 14, 18 und 20 in einen Ruhezustand versetzt, der sie dazu veranlaßt, keine Transponderdaten auszusenden, auch wenn ihre jeweiligen Totzeiten abgelaufen sein sollten.

Nachdem der Leser 10 diese Transponderdaten A16 vollständig erfaßt hat und der betreffende Transponder 16 identifiziert worden ist, sendet der Leser 10 ein Quittungssignal E. Die übrig gebliebenen Transponder 14, 18 und 20 empfangen dieses Quittungssignal E und beginnen nun erneut, über ihren Zufallsgenerator 48 und die Verzögerungsschaltung 50 eine zufällige Totzeit T zu erzeugen. Der Transponder mit der kürzesten Totzeit beginnt danach mit der Ausstrahlung seiner Transponderdaten, und der voranstehend beschriebene Vorgang wiederholt sich solange, bis alle Transponder 14, 16, 18 und 20 vereinzelt sind bzw. bis alle Transponder 14, 16, 18 und 20 einzeln nacheinander ihre Transponderdaten A14, A16, A18 und A20 ausgesendet haben und diese vom Leser erkannt und identifiziert worden sind.

Zu erwähnen ist noch, daß durch das Quittungssignal E nicht nur die übrig gebliebenen Transponder wieder aktiviert werden; vielmehr wird der zuvor gerade identifizierte Transponder (in dem Beispiel in Fig. 4 der Transponder 16) in einen Passivzustand versetzt, in welchem er nicht mehr auf Signale des Lesers 10 reagiert, weil er ja seine Transponderdaten A16 bereits ausgesendet hat.

Es besteht noch die Möglichkeit, daß der jeweils vom Leser 10 korrekt identifizierte Transponder 14, 16, 18 und 20 bzw. dessen Identifikationsnummer oder Identifikationsdaten optisch zur Anzeige gebracht werden, so daß für eine Person, welche den betreffenden Transponder trägt, ersichtlich ist, daß sein Transponder identifiziert wurde.

## Patentansprüche

1. Verfahren zur automatischen Identifikation einer unbekannten Anzahl von Transpondern (14, 16, 18, 20) durch einen Leser (10), wobei die Transponder (14, 16, 18, 20) durch ein elektromagnetisches Feld (12) des Lesers (10) aktiviert werden und ihre spezifischen Transponderdaten (Identifikationsdaten des Transponders sowie applikationsspezifische Kenndaten) an den Leser (10) senden, wobei die Transponder (14, 16, 18, 20) einzeln nacheinander durch den Leser (10) identifiziert und die Transponderdaten (A14, A16, A18, A20) ausgewertet werden, und wobei wenigstens für eine erste Identifikationsphase die im Wirkungsbereich des elektromagnetischen Feldes (12) befindlichen und aktivierten Transponder (14, 16, 18, 20) durch ein vom Leser (10) gesendetes Signal (C) in einen Zustand versetzt werden, in dem jeder Transponder (14, 16, 18, 20) für sich eine zufällige oder pseudozufällige Totzeit (T1) erzeugt, worauf am Ende ihrer Totzeiten (T1) die Transponder (14, 16, 18, 20) damit beginnen, ihre Transponderdaten (A14, A16, A18, A20) auszusenden, nach vollständigem Empfang der Transponderdaten (A14, A16, A18, A20) des einzelnen Transponders (14, 16, 18, 20) der Leser (10) ein Quittungssignal (E) sendet, durch das Quittungssignal (E) der identifizierte Transponder (14, 16, 18, 20) in einen Passivzustand versetzt wird, in welchem er keine Transponderdaten (A14, A16, A18, A20) für eine erste Identifikation mehr sendet, schließlich die anderen im Ruhezustand befindlichen Transponder (14, 16, 18, 20) wieder aktiviert werden und die voranstehend beschriebenen Schritte wiederholt werden, bis alle Transponder (14, 16, 18, 20) nacheinander vom Leser (10) einzeln identifiziert worden sind, **dadurch gekennzeichnet, dass**
- die noch nicht identifizierten Transponder (14, 16, 18, 20) durch ein Kollisionssignal (C) des Lesers (10) in einen Totzustand versetzt werden, in dem sie keine Transponderdaten (A14, A16, A18, A20) aussenden und gleichzeitig die zufällige oder pseudozufällige Totzeit (T) erzeugen,
- nachdem wegen der voneinander abweichenden Totzeiten (T) wieder ein erster Transponder (14, 16, 18, 20) begonnen hat, Transponderdaten (A14, A16, A18, A20) zu senden und der Leser (10) die Transponderdaten (A14, A16, A18, A20) empfängt, sendet der Leser (10) ein Belegungssignal (D), durch das die übrigen Transponder (14, 16, 18, 20) in einen Ruhezustand versetzt werden, in welchem sie keine Transponderdaten (A14, A16, A18, A20) mehr aussenden,
- die übrigen Transponder (14, 16, 18, 20) durch das Quittungssignal (E) wieder aktiviert werden.
- bei gleichzeitigem Empfang der Transponderdaten (A14, A16, A18, A20) mehrerer Transponder (14, 16, 18, 20) sendet der Leser (10) erneut ein Kollisisionssignal (C).

2. Verfahren nach Anspruch 1, **dadurch gekennzeichnet, dass** die Totzeit (T) durch eine Zahl definiert wird, welche von einem Zufallsgenerator (48) erzeugt wird.

3. Verfahren nach Anspruche 1 oder 2, **dadurch gekennzeichnet, dass** die Identifizierungsdaten (A14, A16, A18, A20) des Transponders (14, 16, 18, 20) zur Erzeugung der Totzeit (T) herangezogen werden.

4. Verfahren nach einem der Ansprüche 1 - 3, **dadurch gekennzeichnet, dass** die Totzeit (T) mit Hilfe eines Algorithmus erzeugt wird, welcher eine Pseudozufallszahl errechnet.

5. Verfahren nach Anspruch 1 oder 2, **dadurch gekennzeichnet, dass** die noch im Ruhezustand befindlichen Transponder (T) durch das Quittungssignal (E) dazu veranlasst werden, erneut eine zufällige Totzeit (T) zu erzeugen, an deren Ende sie damit beginnen, ihre Transponderdaten (A14, A16, A18, A20) auszusenden.

6. Verfahren nach einem der Ansprüche 1 - 5, **dadurch gekennzeichnet, dass** alle Transponder (14, 16, 18, 20) auf der gleichen Frequenz senden.

7. Verfahren nach einem der Ansprüche 1 - 6, **dadurch gekennzeichnet, dass** sich der Leser (10) nach der Identifikation aller Transponder (14, 16, 18, 20) in einen Wartezustand schaltet.

8. Verfahren nach Anspruch 7, **dadurch gekennzeichnet, dass** der Leser (10) im Wartezustand ein kontinuierliches oder durch Pausen unterbrochenes elektromagnetisches Feld (12) erzeugt, das von allen identifizierten Transpondern (14, 16, 18, 20) überwacht wird, und dass der oder die Transponder (14, 16, 18, 20), welche das zu überwachende Feld (12) nicht registrieren, Transponderdaten (A14, A16, A18, A20) zur Signalisierung ihrer Abwesenheit senden und diese Transponderdaten (A14, A16, A18, A20) vom Leser (10) ausgewertet werden.

9. Verfahren nach einem der Ansprüche 1 - 8, **dadurch gekennzeichnet, dass** die Transponder (14, 16, 18, 20) im Passivzustand wiederholt Transponderdaten (A14, A16, A18, A20) zur Signalisierung ihrer Anwesenheit senden und diese Transponderdaten (A14, A16, A18, A20) vom Leser (10) ausgewertet werden.

10. Identifikationssystem mit einem Leser (10) und mehreren Transpondern (14; 16; 18; 20) zur Durchführung des Verfahrens nach den Ansprüchen 1 bis 9, **dadurch gekennzeichnet, dass** der Leser (10) eine Kollisionserkennungsschaltung (32) besitzt, durch welche der gleichzeitig Empfang mehrerer Transponderdaten (A14; A16; A18; A20) erkannt wird, und welche die Aussendung eines Kollisionssignals (C) veranlasst, und dass die Transponder (14; 16; 18; 20) eine Steuerschaltung (44) zur Erkennung und Auswertung des Kollisionssignals (C) umfassen.

11. Identifikationssystem nach Anspruch 10, **dadurch gekennzeichnet, dass** jeder Transponder (14; 16; 18; 20) einen Zufallsgenerator (48) zur Erzeugung einer Zufallszahl und eine Verzögerungsschaltung (50) besitzt, um eine der Zufallszahl entsprechende Totzeit (T1) zu erzeugen.

## Claims

1. Method for the automatic identification of an unknown number of transponders (14, 16, 18, 20) by a reader (10), the transponders (14, 16, 18, 20) being activated by an electromagnetic field (12) of the reader (10) and transmit their specific transponder data (identification data of the transponder and application-specific characteristic data) to the reader (10), the transponders (14, 16, 18, 20) being individually and successively identified by the reader (10) and the transponder data (A14, A16, A18, A20) are evaluated, and in which at least for a first identification phase the transponder (14, 16, 18, 20) located in and activated in the range of effectiveness of the electromagnetic field (12) is brought by a signal (C) transmitted by the reader (10) into a state in which each transponder (14, 16, 18, 20) produces for itself a random or pseudorandom dead time (T1), after which at the end of their dead times (T1) the transponders (14, 16, 18, 20) start to transmit their transponder data (A14, A16, A18, A20), following the complete reception of the transponder data (A14, A16, A18, A20) of the individual transponder (14, 16, 18, 20) the reader (10) transmits an acknowledgement signal (E), which brigs the identified transponder (14, 16, 18, 20) into a passive state, in which it no longer transmits transponder data (A14, A16, A18, A20) for a first identification and finally the other transponders (14, 16, 18, 20) in the rest state are reactivated and the above-described steps are repeated until all the transponders (14, 16, 18, 20) are successively and individually identified by the reader (10), **characterized in that** the not yet identified transponders (14, 16, 18, 20) are brought by a collision signal (C) of the reader (10) into a dead state in which they transmit no transponder data (A14, A16, A18, A20) and simultaneously produce the random or pseudorandom dead time (T), after which due to the mutually varying dead times (T) once again a first transponder (14, 16, 18, 20) has again started to transmit transponder data (A14, A16, A18, A20) and the reader (10) receives the transponder data (A14, A16, A18, A20), the reader (10) transmitting a seizing signal (D) through which the remaining transponders (14, 16, 18, 20) are brought into a rest state in which they no longer transmit transponder data (A14, A16, A18, A20), the remaining transponders (14, 16, 18, 20) are reactivated by the acknowledgement signal (E) and in the case of simultaneous reception of the transponder data (A14, A16, A18, A20) of several transponders (14, 16, 18, 20), the reader (10) again transmits a collision signal (C).

2. Method according to claim 1, **characterized in that** the dead time (T) is defined by a number generated by a random number generator (48).

3. Method according to claim 1 or 2, **characterized in that** the identification data (A14, A16, A18, A20) of the transponder (14, 16, 18, 20) are used for producing the dead time (T).

4. Method according to one of the claims 1 to 3, **characterized in that** the dead time (T) is produced with the aid of an algorithm, which calculates a pseudorandom number.

5. Method according to claim 1 or 2, **characterized in that** the transponders still in the rest state are caused by the acknowledgement signal (E) to again produce a random dead time (T), at the end of which they start to transmit their transponder data (A14, A16, A18, A20).

6. Method according to one of the claims 1 to 5, **characterized in that** all the transponders (14, 16, 18, 20) transmit on the same frequency.

7. Method according to one of the claims 1 to 6, **characterized in that** after the identification of all the transponders (14, 16, 18, 20), the reader (10) switches into a standby state.

8. Method according to claim 7, **characterized in that** in the standby state the reader (10) produces a continuous or pause-interrupted electromagnetic field (12), which is monitored by all the identified transponders (14, 16, 18, 20), and that the transponder or transponders (14, 16, 18, 20) not registering the field (12) to be monitored, transmit transponder data (A14, A16, A18, A20) to indicate their absence and said transponder data (A14, A16, A18, A20) are evaluated by the reader (10).

9. Method according to one of the claims 1 to 8, **characterized in that** in the passive state the transponders (14, 16, 18, 20) repeatedly transmit transponder data (A14, A16, A18, A20) indicating their presence and said transponder data (A14, A16, A18, A20) are evaluated by the reader (10).

10. Identification system with a reader (10) and several transponders (14, 16, 18, 20) for performing the method according to claims 1 to 9, **characterized in that** the reader (10) has a collision detection circuit (32) which detects the simultaneous reception of several transponder data (A14, A16, A18, A20) and which gives rise to the emission of a collision signal (C), and that the transponders (14, 16, 18, 20) incorporate a control circuit (44) for detecting and evaluating the collision signal (C).

11. Identification system according to claim 10, **characterized in that** each transponder (14, 16, 18, 20) has a random number generator (48) for generating a random number and a delay circuit (50) in order to produce a dead time (T1) corresponding to the random number.

## Revendications

1. Procédé d'identification automatique d'un nombre inconnu de transpondeurs (14, 16, 18, 20) au moyen d'un lecteur (10), les transpondeurs (14, 16, 18, 20) étant activés par un champ magnétique (12) du lecteur (10) et envoient leurs données transpondeur spécifiques (données d'identification du transpondeur et données caractéristiques spécifiques à l'application) au lecteur (10), les transpondeurs (14, 16, 18, 20) étant identifiés individuellement, l'un après l'autre, par le lecteur (10) et les données transpondeur (A 14, A16, A18, A20) évaluées, et, les transpondeurs (14, 16, 18, 20) activés, qui se trouvent dans la zone d'action du champ électromagnétique (12), étant, au moins pour une première phase d'identification, placés par un signal ( c), envoyé par le lecteur (10), dans un état, dans lequel chaque transpondeur (14, 16, 18, 20) génère pour soi un temps mort aléatoire ou pseudo-aléatoire (T1), après quoi, à la fin de leurs temps morts (T1), les transpondeurs (14, 16, 18, 20) commencent à envoyer leurs données transpondeur (A14, A16, A18, A20), après réception complète des données (A14, A16, A18, A20) de chaque transpondeur individuel (14, 16, 18, 20), le lecteur (10) envoie un signal d'acquittement (E), qui place le transpondeur identifié (14, 16, 18, 20) dans un état passif, dans lequel il n'envoie plus de données transpondeur (A14, A16, A18, A20) pour une première identification, les autres transpondeurs (14, 16, 18, 20) au repos étant finalement à nouveau activés et les étapes décrites ci-dessus répétées jusqu'à ce que tous les transpondeurs (14, 16, 18, 20) aient été identifiés individuellement par le lecteur (10), **caractérisé en ce que**
- les transpondeurs (14, 16,18, 20) non encore identifiés sont placés par un signal de collision (C) du lecteur (10) dans un état mort, dans lequel ils n'envoient pas de données transpondeur (A14, A16, A18, A20), mais génèrent simultanément le temps mort aléatoire ou pseudo-aléatoire (T),
- une fois qu'un premier transpondeur (14, 16, 18, 20), en raison des temps morts (t) différents les uns des autres, a commencé à envoyer des données transpondeur (A14, A16, A18, A20) et que le lecteur (10) reçoit les données transpondeur (A14, A16, A18, A20), le lecteur (10) envoie un signal d'occupation (D), grâce auquel les autres transpondeurs (14, 16, 18, 20) sont placés dans un état de repos, dans lequel ils n'envoient plus de données transpondeur (A14, A16, A18, A20),
- les autres transpondeurs (14, 16, 18, 20) sont à nouveau activés par le signal d'acquittement (E).
- à réception simultanée des données transpondeur (A14, A16, A18, A20) de plusieurs transpondeurs (14, 16, 18, 20), le lecteur (10) envoie à nouveau un signal de collision (C).

2. Procédé suivant la revendication 1, **caractérisé en ce que** le temps mort (T) est défini par un nombre généré par un générateur de nombres aléatoires (48).

3. Procédé suivant les revendications 1 ou 2, **caractérisé en ce que** les données d'identification (A14, A16, A18, A20) du transpondeur (14, 16, 18, 20) sont utilisées pour générer le temps mort (T).

4. Procédé suivant une des revendications 1 à 3, **caractérisé en ce que** le temps mort (T) est généré à l'aide d'un algorithme qui calcule un nombre pseudo-aléatoire.

5. Procédé suivant la revendication 1 ou 2, **caractérisé en ce que** les transpondeurs se trouvant encore en position de repos sont incités par le signal d'acquittement (E) à générer à nouveau un temps mort aléatoire (T), à la fin duquel ils commencent à envoyer leurs données transpondeur (A14, A16, A18, A20).

6. Procédé suivant une des revendications 1 à 5, **caractérisé en ce que** tous les transpondeurs (14, 16, 18, 20) envoient sur la même fréquence.

7. Procédé suivant une des revendications 1 à 6, **caractérisé en ce que** le lecteur (10) se place en état d'attente après l'identification de tous les transpondeurs (14, 16, 18, 20).

8. Procédé suivant la revendication 7, **caractérisé en ce que** le lecteur (10) en état d'attente génère un champ électromagnétique (12) continu ou interrompu par des pauses, qui est surveillé par tous les transpondeurs (14, 16, 18, 20) identifiés et que le ou les transpondeurs (14, 16, 18, 20), qui n'enregistrent pas le champ (12) à surveiller, envoient des données transpondeur (A14, A16, A18, A20) pour signaler leur absence et que ces données transpondeur (A14, A16, A18, A20) sont évaluées par le lecteur (10).

9. Procédé suivant une des revendications 1 à 8, **caractérisé en ce que,** en état passif, les transpondeurs (14, 16, 18, 20) envoient des données transpondeur (A14, A16, A18, A20) de manière répétitive pour signaler leur présence et que ces données transpondeur (A14, A16, A18, A20) sont évaluées par le lecteur (10).

10. Système d'identification avec un lecteur (10) et plusieurs transpondeurs (14, 16, 18, 20) servant à l'exécution du procédé suivant les revendications 1 à 9, **caractérisé en ce que** le lecteur (10) possède un circuit de reconnaissance de collision (32), au moyen duquel la réception simultanée d'une pluralité de données transpondeur (A14, A16, A18, A20) est reconnue et qui entraîne l'envoi d'un signal de collision (C) et que les transpondeurs (14, 16, 18, 20) comprennent un circuit de commande (44) pour la reconnaissance et l'évaluation du signal de collision (C).

11. Système d'identification suivant la revendication 10, **caractérisé en ce que** chaque transpondeur (14, 16, 18, 20) possède un générateur de nombres aléatoires (48) pour générer un nombre aléatoire, ainsi qu'un circuit de temporisation (50) pour générer un temps mort (T1) qui correspond au nombre aléatoire.
